# EUROPEAN PATENT APPLICATION

(11) **EP 2 434 497 A1**
(43) Date of publication of application: **28.03.2012**
(21) Application number: 10777530.6
(22) Date of filing: 12.05.2010
(51) Int. Cl.: G21C 9/004, G21C 15/18, G21D 1/00

(54) **NUCLEAR REACTOR CONTAINMENT STRUCTURE**

(30) Priority: 20.05.2009 JP 2009122495
(71) Applicant: Mitsubishi Heavy Industries, Ltd., Tokyo 108-8215 (JP)
(72) Inventor: FUKUDA, Hideo, Nagasaki 851-0392 (JP); UDA, Nobuki, Hyogo 676-8686 (JP); MATSUOKA, Hiroshi, Tokyo 108-8215 (JP)
(74) Representative: Intès, Didier Gérard André
(86) International application number: PCT/JP2010/003211
(87) International publication number: WO 2010/134291

(57) **Abstract**

The reactor containment structure is provides with a reactor containment vessel (10), a reactor containment chamber (11) which is installed inside the reactor containment vessel (10) to contain a nuclear power reactor (5), a pool (12) which is installed inside the reactor containment vessel (10) so as to be below the reactor containment chamber (11) adjacently and in which an emergency cooling liquid (W) is stored, an opening part (11b) which allows the emergency cooling liquid (W) to flow into the pool (12) from the reactor containment chamber (11), a sump (13) which is installed below the pool (12), a debris filtering body (14) which is installed at the sump (13) to filter debris contained in the emergency cooling liquid (W), a pumping device (20) which sucks the emergency cooling liquid (W) from the sump (13) and discharges the emergency cooling liquid (W) into the reactor containment chamber (11) and a baffle plate (30) which guides the emergency cooling liquid (W) that flows into the pool (12) from the opening part (11b) in a direction spaced away from the sump (13).

## Description

### TECHNICAL FIELD

The present invention relates to a reactor containment structure which is used in a pressurized water reactor.
The application concerted is to claim the right of priority to Japanese Patent Application No. 2009-122495 filed on May 20, 2009, with the content cited herewith.

### BACKGROUND ART

As widely known, in a pressurized water reactor, pressure is applied so as not to boil a primary coolant (light water). The primary coolant is heated by thermal energy generate by nuclear fission reactions of a nuclear power reactor and the heated primary coolant heated to a high temperature is fed to a steam generator. Thereby, a secondary coolant (light water) is boiled to notate a turbine generator with high temperature and high pressure steam, thereby generating electric power.

In such a pressurized water reactor, a safety structure is adapted in order to prevent a nuclear power reactor from being excessively heated on occurrence of a loss-of-primary-coolant accident. The safety structure is provided mainly with a reactor containment vessel and a pumping device.
The reactor containment vessel is provide mainly with a reactor containment chamber, a pool (sump pool) and a sump. The reactor containment chamber contains a nuclear power reactor. The pool is installed inside the reactor containment vessel so as to be below the reactor containment chamber adjacently, and an emergency cooling liquid is stored in the pool. The sump is installed at a lower part of the pool. Further, at a lower part of the reactor containment chamber, there is installed an opening part for allowing the emergency cooling liquid inside the reactor containment chamber to flow into the pool.
The pumping device sucks the emergency cooling liquid from the sump and discharges the liquid from an upper part of the reactor containment chamber.
In the above-described safety structure, the emergency cooling liquid is sucked by the pumping device from the sump at the lower part of the pool and discharged from the upper part of the reactor containment chamber. The discharged emergency cooling liquid flows into the pool from the opening part of the reactor containment chamber. In addition, the discharged cooling liquid is again sucked by the pumping device to circulate inside the safety structure.

In the above-described safely structure, on occurrence of a loss-of-primary-cootant accident, ejection of a high-pressure primary coolant produces debris such as pieces of heat-insulating materials and metal pieces, and the debris flows into the pool. Therefore, a debris filtering body such as a sump screen is installed at the sump so that no debris is sucked into the pumping device. However, a large quantity of the debris adhered to the debris filtering body will result in an increase in load of the pumping device or a reduction in circulation efficiency. Therefore, it is desirable to avoid adhesion of a large quantity of debris to the debris filtering body.

For example, the reactor containment structure disclosed in Patent Document I below is provided at an opening on a floor of a reactor containment chamber with a second sump which functions as a temporary storage tank for emergency cooling water. Further, a second screen is installed at a part where water flows from the second sump to the pool, That is, debris is trapped by the second screen so as not to flow into the pool, thereby inhabiting adhesion of the debris to the sump screen.

### PRIOR ART DOCUMENT

### [Patent Document]

Patent Document 1: Japanese Published Unexamined Patent Application No. H7-260977

### DISCLOSURE OF INVENTION

### [Problems to be Salved by the Invention]

However, the above-described pressurized water reactor has a problem that it is impossible to install the second sump at every opening. That is, it is structurally impossibly to install the above-described second sump, for example, at an opening part of a companionway (hatch) installed between the pool and the reactor containment chamber. Further, it can be considered to configure the opening part openable/closable. However, if the opening part of the companionway (hatch) is made openable/closable, there are problem such as a reduction in maintenance performance and a reduction in circulation efficiency of emergency cooling water.

The present invention providers a reactor containment structure which is capable of inhibiting adhesion of debris to a debris filtering body and simplifying a configuration of an opening part.

### [Means for Solving the Problems]

In order to achieve the above object, the reactor containment structure of the present invention is configured with the following:
a reactor containment vessel which is provide with a reactor containment chamber halving an opening part communicate with a lower floor at a lower part of a room containing a nuclear power reactor, a sump pool installed on the lower floor to store an emergency cooling liquid, and a sump installed at a lower part of the sump pool;
a debris filtering body which is installed at the sump; and
a pump body which sucks the emergency cooling liquid from the sump to discharge the emergency cooling liquid from an upper part of the reactor containment chamber.
In the above-configured reactor containment structure, the emergency cooling liquid discharged from the upper part of the reactor containment chamber flows again into the sump pool from the opening part of the reactor containment chamber and the emergency cooling liquid circulates.
In the reactor containment structure of the present invention, a baffle plate is installed for regulating a flow channel of the emergency cooling liquid which flows again into the sump pool in such a direction that is spaced away from the sump.
That is, in order to solve the above problems, the reactor containment structure of the present invention is configured with the following:
a reactor containment vessel;
a reactor containment chamber which is installed inside the reactor containment vessel to contain a nuclear power reactor;
a pool which is installed inside the reactor containment vessel so as to be below the reactor containment chamber adjacently and in which an emergency cooling liquid is stored;
an opening part which allows the emergency cooling liquid to flow from the reactor containment chamber to the pool;
a sump which is installed below the pool;
a debris filtering body which is installed at the sump to filter debris contained in the emergency cooling liquid,
a pumping device which sucks the emergency cooling liquid from the sump and discharges the emergency cooling liquid into the reactor containment chamber; and
a baffle plate for guiding the emergency cooling liquid which flows into the pool from the opening part in a direction spaced away from the sump.
According to this configuration, the emergency cooling liquid which flows into the pool (sump pool) is guided by the baffle plate in a direction spaced away from the sump. It is, wherefore, possible to make the flow channel of the emergency cooling liquid longer compared to conventional cases that flows into the pool and reaches the debris filtering body. Thereby, the debris contained in the emergency cooling liquid which flows into the pool can settle more easily on the way to the sump compared to conventional cases. The debris that reaches the debris filtering body in the present invention is, therefore, further reduced in amount compared to conventional cases. As a result, adhesion of the debris to the debris filtering body is inhibited.
Further, since a necessity for installing a sump structure at an opening part or an opening/closing mechanism is eliminated, the opening part can be simplified in configuration.
Therefore, according to the reactor containment structure of the present invention, it is possible to inhibit adhesion of the debris to the debris filtering body and simplify a configuration of the opening part.

The baffle plate may be curved in a direction spaced away from the sump. That is, the baffle plate may be curved and spaced away from the sump.
According to this configuration, it is possible to increase the strength of the baffle plate in relation to fluid loads of the emergency cooling liquid which flows into the pool to which the baffle plate is subjected. Accordingly, the baffle plate can be made thinned.
Further, the baffle plate is reduced in resistance with respect to the emergency cooling liquid, by which the emergency cooling liquid flows smoothly without stagnation.

The baffle plate may be bent in a direction spaced away from the sump. That is, the baffle plate may be spaced away from the sump so as to be folded down.
According to this configuration, it is possible to manufacture the baffle plate easily.

Still further, there may be installed along the baffle plate an auxiliary plate that regulates the flow channel width of the emergency cooling liquid.
According to this configuration, it is possible to easily control the flow of the emergency cooling liquid which floes into the pool.

The baffle plate may be installed in such a manner the ratio of L/D is from 1 to 1.5, which is a ratio of a direct distance (direct dimension) L connecting the both end parts of the baffle plate in a direction at which the emergency cooling liquid flows to the How channel width D.
According to this configuration, it is possible to make the fluid loads of the emergency cooling liquid small to which the baffle plate is subjected.

### [Effect of the Intention]

According to the reactor containment structure of the present intention, it is possible to inhibit adhesion of debris to the debris filtering body and simplify a configuration of the opening part.

### BRIEF DESCRIPTION OF THE DRAWINGS

Fig. 1 is a schematic view of a reactor containment structure 1 of an embodiment of the present intention.
Fig. 2 is a sectional view which shows major parts of the reactor containment structure 1 of the embodiment of the present invention, and a sectional view taken along the line I-I in Fig. 1.
Fig. 3 is an enlarged sectional view which shows major parts of the reactor containment structure I of the embodiment of the present intention, and an enlarged sectional view of a baffle plate 30 and an auxiliary plate 40.
Fig. 4 is an enlarged sectional view of a baffle plate 31 and an auxiliary plate 41 which are modified examples of the baffle plate 30 and the auxiliary plate 40 of the embodiment of the present invention.

### BEST MODE FOR CARRYING OUT THE INVENTION

A description will be given of the embodiment of the present invention with reference to the drawings.

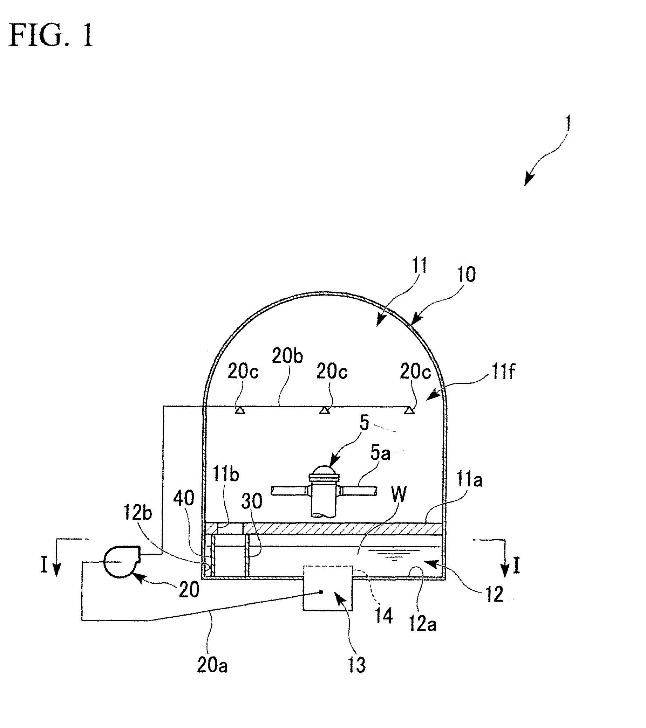

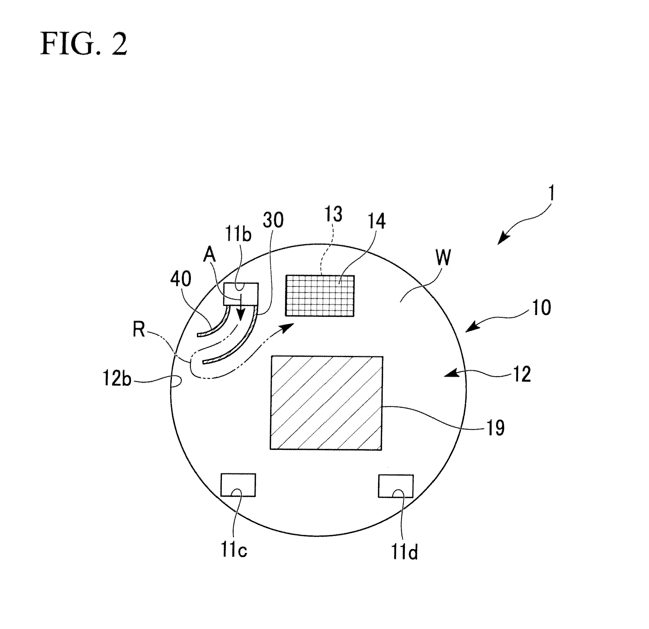

Fig. 1 is a schematic view which shows the reactor containment structure 1 of the embodiment of the present invention. Fig. 2 is a sectional view taken along the line I-I in Fig. 1.
As shown in Fig. 1, the reactor containment structure 1 is provided with a reactor containment vessel 10 which contains a nuclear power reactor 5 and also with a circulating pump (pumping device, pump body) 20.

The reactor containment vessel 10 is provide with a reactor containment chamber 11 which contains the nuclear power reactor 5 and also with a pool (sump pool) 12 in which emergency cooling water (emergency cooling liquid) W is stored.
The reactor containment chamber 11 is installed inside the reactor containment vessel 10. The reactor containment chamber 11 contains a steam generator, a pressurizer, and so on, which are not illustrated, together with the nuclear power reactor 5. As shown in Fig. 1 and Fig. 2, opening parts 11b, 11c, 11d communicate with a lower floor are installed on a floor part 11a of the reactor containment chamber 11.

The pool 12 is installed inside the reactor containment vessel 10 so as to be below the reactor containment chamber 11 adjacently. The emergency cooling water W is stored in the pool 12. That is, the pool 12 is installed on a lower floor of the reactor comtainment vessel 10 and, more specifically, installed on the basement floor of the reactor cotainment vessel 10.
As shown in Fig. 1. a circulation sump (sump) 13 is installed bellow a bottom part 12a of the pool 12. The circulation sump 13 is installed so as to be lower by one step than the bottom part 12a of the pool 12. The circulation sump 13 is provided with a sump screen (debris filtering body) 14 for filtering debris such as broken pieces contained in the emergency cooling water W. The sump screen 14 is installed so as to cover an opening part of the circulation sump 13.
A structure 19 which is shown in Fig. 2 is a structure such as a supporting pillar, for example.

The sump screen 14 is formed in the shape of a box in which one surface is opened. The sump screen 14 is installed in such a manner that the opened side is superimposed on the opening part of the circulation sump 13. That is, the sump screen 14 covers the opening part of the circulation sump 13 in a condition where the open side of the sump screen 14 is arranged lower in position than the bottom side thereof. Further, as shown in Fig. 1, the sump screen 14 is submerged entirely for effectively utilizing entire area of the sump screen in trapping broken pieces.
In place of the sump screen 14. there may be used a debris filtering body in which plate members halving through holes are stacked in a multiple stage.

As shown in Fig. 1. the circulating pump 20 is connected to one end part of a suction side piping 20a. The other end part of the suction side piping 20a is connected to the circulation sump 13 and opened at the circulation sump 13. Further, the circulating pump 20 is connected to a discharge side piping 20b. The discharge side piping 20b is connected to spray nozzles 20c mounted at an upper part 11f of the reactor containment chamber 11.

The reactor containment structure 1 actuates the circulating pump 20 on occurrence of a loss-of-primary-coolant accident in association with breakage of a piping part 5a of the nuclear power reactor 5. The circulating pump 20 sucks the emergency cooling water W stored in the pool 12 from the circulation sump 13. The circulating pump 20 discharged the sucked emergency cooling water W through the spray nozzles 20c installed at the upper part 11f of the reactor containment chamber 11. The circulating pump 20 discharges the emergency cooling water W through the spray nozzles 20c to supply the emergency cooling water W to the nuclear power reactor 5, thereby cooling the nuclear power reactor 5.

The emergency cooling water W which has cooled the nuclear power reactors 5 and runs off the floor part 11a flows into the pool 12 from the opening parts 11b, 11c.
I 1d. As described so far, the reactor containment structure 1 allows the emergency cooling water W in the pool 12 to circulate.
Here, below the opening part 11b, there are installed structures such as stairs and a ladder which are not illustrated. Due to the influence of the structures (not illustrated), the emergency cooling water W flows in the direction indicated by an arrow A in Fig. 2 (a direction from the back to the front on the space in Fig. 1) when flowing from the opening part 11b into the pool 12.

As shown in Fig. 1 and Fig. 2, the reactor containment structure I is provided with the baffle plate 30 and the auxiliary plate 40. The baffle plate 30 and the auxiliary plate 40 are installed below the opening part 11b which is the closest to the circulation sump 13.
As shown in Fig. 1, the baffle plate 30 is installed so as to extend from downward to upward from the bottom part 12a of the pool 12 to the floor part 11a of the reactor containment chamber 11. As shown in Fig. 2, the baffle plate 30 is curved so as to gradually approach a wall part 12b of the pool 12, as it moves away from an end part below the opening part 11b to the direction indicated by the arrow A. An end part of the baffle plate 30, opposite to the opening part 11b, extends up to the vicinity of the wall part 12b.

The baffle plate 30 guides the emergency cooling water W which flows into the pool 12 from the opening part 11b in a direction spaced away from the circulation sump 13. In other words, the baffle plate 30 regulates the flow channel R of the emergency cooling water W which flows from the opening part 11b in a direction spaced away from the circulation sump 13. Thereby, the emergency cooling water W which flows into the pool 12 from the opening part 11b flows along the baffle plate 30 so as to be spaced away from the circulation sump 13, as shown in Fig. 2. That is, the emergency cooling water W flows in such a manner that a direct distance from the circulation sump 13 is gradually increased.

As shown in Fig. 1, the auxiliary plate 40 is installed so as to extend from downward to upward from the bottom part 12a of the pool to the floor part 11a of the reactor containment chamber 11. As shown in Fig. 2, the auxiliary plate 40 is installed along the baffle plale 30 at a position which is closer to the wall part 12b than the baffle plate 30. The auxiliary plate 40 is curved so as to gradually approach the wall part 12b of the pool 12 as it moves away from a lower end of the opening part 11b to the direction indicated by the arrow A. An end part opposite to the opening part 11b of the auxiliary plate 40 extends up to the vicinity of the wall part 12b.
In the present embodiment, the auxiliary plate 40 and the baffle plate 30 regulate the width of the flow channel R of the emergency cooling water W which flows from the opening part 11b.

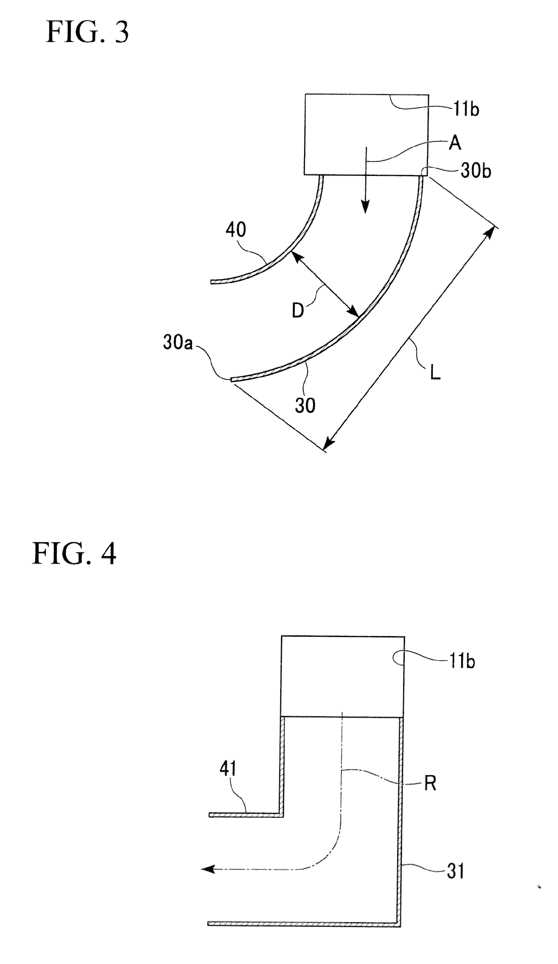

Fig. 3 is an enlarged view of the baffle plate 30 and the auxiliary plate 40.
As shown in Fig. 3, the baffle plate 30 and the auxiliary plate 40 are curved so that the flow channel width D which is a width of the flow channel R between the baffle plate 30 and the auxiliary plate 40 is substantially equal from one end part 30b of the baffle plate 30 to the other end part 30a thereof. Here, a direct distance between the one end part 30b of the baffle plate 30 and the other end part 30a is given as L. At this time, the baffle plate 30 and the auxiliary plate 40 are installed in such a manner that the ratio of L/D is to be 1.2, which is a ratio of the direct distance L to the flow channel width D.

In the reactor containment structure 1 shown in Fig. 1, on occurrence of a loss-of-primary-coolant accident, a high-pressure primary coolant is ejected, by which debris such as broken pieces of heat-insulating materials and mental pieces is scattered inside the reactor containment chamber 11.
At this time, the circulating pump 20 is actuated to suck the emergency cooling water W in the circulation sump 13. The circulating pump 20 supplies the sucked emergency cooling water W to the nuclear power realtor 5 from the spray nozzles 20c installed at the upper part 11f of the reactor containment chamber 11. The emergency cooling water W which has been supplied to the nuclear power reactor 5 cools the nuclear power reactor 5 and runs off the floor part 11a. The emergency cooling water W which has run off the floor part 11a flows into the pool 12 from the opening parts 11b, 11c, 11d, together with the debris.

The emergency cooling water W which flows into the pool 12 from the opening part 11b flows inside the pool 12 along the flow channel R as shown in Fig. 2.
First, the emergency cooling water W flows between the baffle plate 30 and the auxiliary plate 40 so as to be spaced away from the circulation sump 13. The emergency cooling water W passes between the baffle plate 30 and the auxiliary plate 40 and, thereafter, flows toward the circulation sump 13. Then, the emergency cooling water W passes through the sump screen 14 and flows into the circulation sump 13. That is, the emergency cooling water W is bypassed by the baffle plate 30 so as to be moved away from the circulation sump 3 and, thereafter, flows into the circulation sump 13.

When the emergency cooling water flows from the opening part 11b to the pool 12, the fluid loads are exerted from the emergency cooling water W to the baffle plate 30. Here, the baffle plate 30 is formed cursed. Therefore, the baffle plate 30 is reduced in resistance with respect to the emergency cooling water W and the emergency cooling water W flows smoothly without any stagnation of the emergency cooling water W.
Further, where the ratio of L/D is smaller than 1, which is a ratio of a direct distance L between both end parts of the baffle plate 30 to the flow channel width D between the baffle plate 30 and the auxiliary plate 40, it is difficult to sufficiently bypass the flow of the emergency cooling water W. Also where the ratio of L/D is greater than 1.5, the baffle plate 30 becomes great in fluid loads of the emergency cooling water W to which the baffle plate 30 is subjected. In the present embodiment, the ratio of L/D is set to be 1.2. Therefore, the baffle plate 30 and the auxiliary plate 40 are able to sufficiently bypass the flow of the emergency cooling water W with respect to the circulation sump 13, and the flow channel R can be extended.
Stilt further, the baffle plate 30 is curved, by which the fluid loads of the emergency cooling water W can be decreased to prevent the baffle plate 30 and the auxiliary plate 40 from breakage. In addition, the baffle plate 30 is increased in section modulus by being curved. Therefore, the baffle plate 30 can be increased in strength to prevent the baffle plate 30 from breakage. As a it it is possible to maintain the flow channel R against the fluid force of the emergency cooling water W.

As the flow channel R of the emergency cooling water W which flows into the pool 12 from the opening part 11b and reaches the circulation sump 13 is longer in distance, debris contained in the emergency cooling water W settles on the bottom part 12a of the pool 12 is accordingly increased in amount. In the present embodiment, the baffle plate 30 is installed, by which the flow channel R is extended to be longer than conventional cases. Therefore, most of the debris contained in the emergency cooling water W settles on the bottom part 12a of the pool 12 and accumulates thereon while the emergency cooling water W Hows along the flow channel R. Thereby, the debris contained in the emergency cooling water W hardly reaches the sump screen 14.

As described so far, the debris hardly reaches the sump screen 14 and also hardly adheres to the sump screen 14. Therefore, the circulating pump 20 is prevented from an increase in loads, and the emergency cooling water W is then prevented from a reduction in circulation efficiency. As a result, the emergency cooling water W is favorably circulated the reactor containment structure 1 to maintain good in safety of the nuclear power reactor 5.

As so far described, in the reactor containment structure 1 of the present embodiment, a distance of the emergency cooling water W which flows into the pool 12 and reaches the sump screen 14 can be made longer by the baffle plate 30. Thereby, the debris contained in the emergency cooling water W is made to settle on the bottom part 12a of the pool 12 on its way to the circulation sump 13, thus inhabiting arrival of the debris at the sump screen 14. It is, therefore, possible to inhibit adhesion of the debris to the sump screen 14.
Further, since a necessity for installing a sump structure at the opening part 11b or installing an opening/closing mechanism is eliminated, the configuration can be simplified.
Therefore, according to the reactor containment structure 1 of the present embodiment, it is possible to inhibit adhesion of the debris to the sump screen 14 and simplify a configuration of the opening part 11b.

Further, since the baffle plate 30 is curved so as to be spaced away from the circulation sump 13, it is possible to increase the strength of the baffle plate 30 to fluid loads of the emergency cooling water No to which the baffle plate 30 is subjected. Thereby, the baffle plate 30 can be made thinner.
Still further, the emergency cooling water W is reduced in resistance from the baffle plate 30 and flows smoothly without stagnation of the emergency cooling water W which flows along the baffle plate 30.

In addition, there is installed along the baffle plate 30 the auxiliary plate 40 for regulating the flow channel width D of the emergency cooling water W. Therefore, it is possible to present the flow of the emergency cooling water W from deceiving resistance from other structures (for example, that similar to the structure 19). In addition it is also possible to easily control the flow of the emergency cooling water W which flows into the pool 12.

Here, where the ratio ofL/D is smaller than 1. which is a ratio of a direct distance L connecting the end part 30a of the battle plate 30 with the end part 30b thereof to the flow channel width D, it is difficult to sufficiently bypass the flow of the emergency cooling water W and guide the flow to the circulation sump 13. Further, where the ratio of L/D is greater than 1.5, the baffle plate 30 becomes great in fluid loads of the emergency cooling water W to which the baffle plate 30 is subjected.
In the present embodiment, the ratio of L/D is 1.2. Therefore, the flow of the emergency cooling water W can be bypassed to guide the flow to the circulation sump 13. It is, thereby, possible to make the fluid loads of the emergency cooling water W small to which the baffle plate 30 is subjected.

Fig. 4 is an enlarged sectional view that shows the baffle prate 31 and the auxiliary plate 41 which are modified examples of the above-described baffle plate 30 and the auxiliary plate 40.
As shown in Fig. 4, the baffle plate 31 is bent so as to be folded drown in a direction spaced away from the circulation sump 13 . The auxiliary plate 41 is installed so as to extend along the baffle plate 31, A How channel between the baffle plate 31 and the auxiliary plate 41 is substantially equal in width from one end part of the baffle plate 31 to the other end part excluding the bent part.
According, to this configuration, it is possible to bend the baffle plate 31 and the auxiliary plate 41 by flexibly corresponding to the arrangement relationship with other structures (for example, that similar to the structure 19). It is also possible to easily manufacture the baffle plate 30.

Procedures, shapes and combinations of individual members shown in the above-described embodiments are only examples and can be modified in various ways based on design requirements, and so on, within a scope not departing from the gist of the present intention.
For example, the above-described embodiment is configured in such a manner that the baffle plate 30 is installed from the bottom part 12a of the pool 12 to the floor part 11a thereof. However, the height of the baffle plate 30 from the bottom part 12a of the pool 12 suffices if the height exceeds the water level of the emergency cooling water W which has been stored in the pool 12. Thereby, as with the above-described embodiment, it is possible to inhibit arrival of the debris at the sump screen 14.
Further, even where the height of the baffle plate 30 is lower than the water level of the pool 12, it is possible to control a direction at which some of the emergency cooling water W flows. Therefore, the flow channel of the emergency cooling water W can be partially extended and the debris contained in some of the emergency cooling water W is made to settle in a greater amount compared to conventional cases. Thus, adhesion of the debris to the sump screen 14 can be inhibited at a certain percentage.

Further, although in the above-described embodiment, the ratio of L/D is set to be 1.2, the ratio may be set in a range of 1.0 to 1.5.

Still further, in the above-described embodiment, a description has been given of the baffle plate, the shape of which is curved or bent, However, the baffle plate may be formed straight. In this case as well, it is possible to increase an arrival distance from the opening part 11b to the circulation sump 13. Therefore, debris can be settled in a greater amount compared to conventional cases and adhesion of the debris to the sump screen 14 is inhibited.

In addition, in the above-described embodiment, no baffle plate is installed below the opening parts 11c, 11d. However, a similar baffle plate may be installed below the opening parts 11c, 11d. In this case, an opening part closer to the circulation sump 13 is able to better reduce debris adhered to the sump screen 14 than a case where no battle plate is installed.

A description has been so far made for preferred embodiments of the present intention, to which the present invention shall not be, however, restricted. The present invention may be subjected to addition, omission, replacement and other modifications of the configuration within a scope not deporting from the gist of the present invention. The present invention shall not be restricted to the above description but will be restricted only by the scope of the adhered claims.

### Industrial applicability

The present invention relates to a reactor containment structure which is provided with a reactor containment vessel, a reactor containment chamber which is installed inside the reactor containment vessel to contain a nuclear power reactor, a pool which is installed inside the reactor containment vessel so as to be below the reactor containment chamber adjacently and in which an emergency cooling liquid is stored, an opening part which allows the emergency cooling liquid to flow into the pool from the reactor containment chamber, a sump which is installed below the pool, a debris filtering body which is installed at the sump to filter debris contained in the emergency cooling liquid, a pumping device which sucks the emergency cooling liquid from the sump to discharge the emergency cooling liquid into the reactor containment chamber, and a baffle plate which guides the emergency cooling liquid that Hows into the pool from the opening part in a direction spaced away from the sump, according to the reactor containment structure of the present intention, it is possible to inhibit adhesion of the debris to the debris filtering body and simplify a configuration of the opening part at a companionway (hatch) installed between the pool and the reactor containment chamber.

### [Description of Reference Numerals]

1: reactor containment structure
5: nuclear power reactor
10: reactor containment vessel
11: reactor containment chamber
11a: floor part
11b. 11c and 11d: opening part
11f: upper part
12: pool (sump pool)
13: recirculation sump (sump)
14: sump screen (debris filtering body)
20: recirculating (pumping device, pump body)
30, 31: baffle plate
30a. 30b: both end parts
40, 41: auxiliary plate
D: flow channel width
L: direct distance dimension
R: flow channel
W: emergency cooling water (emergency cooling liquid)

## Claims

1. A reactor containment structure comprising:
a reactor containment vessel;
a reactor containment chamber which is installed inside the reactor containment vessel to contain a nuclear power reactor;
a pool which is installed inside the reactor containment vessel so as to be below the reactor containment chamber adjacently and in which an emergency cooling liquid is stored;
an opening part which allows the emergency cooling liquid to flow into the pool from the reactor containment chamber;
a sump which is installed below the pool;
a debris filtering body which is installed at the sump to filter debris contained in the emergency cooling liquid;
a pumping device which sucks the emergency cooling liquid from the sump to discharge the emergency cooling liquid into the reactor containment chamber; and
a baffle plate which guides the emergency cooling liquid that flows into the pool from the opening part in a direction spaced away from the sump.

2. The reactor containment structure according to claim 1, wherein the baffle plate is curved in a direction spaced away from the sump.

3. The reactor containment structure according to claim 1, wherein the baffle plate is bent in a direction spaced away from the sump.

4. The reactor containment structure according to claim 2 or claim 3, wherein an auxiliary plate for regulating a flow channel width of the emergency cooling liquid is installed along the baffle plate.

5. The reactor containment structure according to claim 4, wherein the baffle plate is from 1 to 1.5 in a ratio of L/D, which is a ratio of a direct distance L connecting both end pans of the baffle plate in a direction at which the emergency cooling liquid flows to the flow channel width D.
